# FASCICULE DE BREVET EUROPEEN

(11) **EP 3 868 659 B1**
(45) Date de publication et mention de la délivrance du brevet: **20.07.2022**
(21) Numéro de dépôt: 20213559.6
(22) Date de dépôt: 11.12.2020
(51) Int. Cl.: B64C 27/57, B64C 27/82, B64D 31/06, G05D 1/08, B64D 43/00

(54) **DISPOSITIF DE SURVEILLANCE D'UNE MARGE DE POUSSEE POUR GIRAVION, GIRAVION ASSOCIE ET PROCEDE CORRESPONDANT**
VORRICHTUNG ZUR ÜBERWACHUNG EINES SCHUBKRAFTSPIELRAUMS FÜR DREHFLÜGELFLUGZEUG, ENTSPRECHENDES DREHFLÜGELFLUGZEUG UND VERFAHREN
POWER MARGIN MONITORING DEVICE FOR ROTORCRAFT, ASSOCIATED ROTORCRAFT AND CORRESPONDING METHOD

(30) Priorité: 20.02.2020 FR 2001699
(43) Date de publication de la demande: 25.08.2021
(73) Titulaire: Airbus Helicopters, 13725 Marignane Cedex (FR)
(72) Inventeur: BERGER, Laurent, 83270 SAINT CYR SUR MER (FR); DUMUR, Guillaume, 13300 SALON DE PROVENCE (FR); PIGER, Damien, 13760 SAINT CANNAT (FR); DELECROIX, Olivier, 13510 EGUILLES (FR); DELSALLE, Didier, 13300 SALON DE PROVENCE (FR)
(74) Mandataire: GPI Brevets

(56) Documents cités:
- EP-A1- 2 258 615
- EP-A1- 2 631 174
- EP-A1- 3 456 627
- EP-A2- 1 841 649
- FR-A1- 3 084 057
- US-B1- 6 371 408

## Description

La présente invention concerne un dispositif pour déterminer une marge de puissance disponible pour un giravion et notamment pour un hélicoptère.

Généralement, pour piloter un giravion le ou les pilotes doivent surveiller constamment de nombreux instruments agencés sur une planche de bord. Ces instruments de bord permettent notamment de signaler au pilote les conditions extérieures au giravion et les valeurs de certains paramètres de fonctionnement du giravion. De tels paramètres de fonctionnement peuvent notamment concerner une installation motrice comportant un ensemble moteur et/ou une boîte de transmission de puissance principale.

Une telle installation motrice d'un giravion permet en outre d'entraîner en rotation au moins un rotor principal participant au moins à la sustentation, voire la propulsion, dans les airs du giravion et éventuellement au moins un rotor arrière. Un tel rotor arrière est également dans la pratique courante désigné par le terme de rotor "anticouple" puisqu'il permet d'exercer un couple susceptible de s'opposer au mouvement de rotation en lacet produit par le rotor principal. Par la suite, l'expression "organe anticouple" peut décrire un tel rotor arrière entraîné en rotation par l'installation motrice ou par un moteur électrique dédié.

En outre, d'autres types d'organes anticouple peuvent également équiper un giravion. De tels organes anticouple peuvent notamment être choisis parmi le groupe comportant des hélices propulsives ou tractives et les volets mobiles permettant d'orienter latéralement un flux de gaz en sortie d'une poutre de queue.

Par ailleurs pour des raisons physiques, il existe de nombreuses limitations de cette installation motrice, que le pilote doit prendre en compte à chaque instant du vol. Ces limitations sont transmises au pilote, au moyen d'indicateurs de situation de puissance.

De tels indicateurs de situation de puissance ont notamment été décrits dans les documents EP 3 456 627, EP 2 631 174, US 6 371 408, FR 3 084 057, EP 2 258 615, EP 1 841 649, FR 2 950 324 et FR 2 973 340. Ces indicateurs connus permettent ainsi de fournir des informations de puissance dans un giravion. Ces indicateurs de situation de puissance sont généralement désignés par des indicateurs de type "FLI", FLI étant l'acronyme de l'expression en langue anglaise "First Limit Indicator" ou "IPL" pour "Instrument de Première Limitation". Avec de tels indicateurs de type FLI, une pluralité de paramètres de fonctionnement peuvent être utilisés tels que notamment un couple rotor ou un couple moteur ou un couple calculé sur la base du couple rotor et du couple moteur, de la température des gaz dans le moteur et de la vitesse de rotation d'un générateur de gaz équipant le moteur.

Cependant, les différents indicateurs ne permettent pas d'indiquer à un pilote de giravion une information représentative d'une marge de puissance disponible au niveau d'un organe anticouple.

Or pour certains giravions, une telle marge de puissance disponible au niveau d'un organe anticouple peut être intéressante pour le pilotage du giravion lors d'une phase de vol à haute altitude. Une réduction de la marge de puissance disponible au niveau de l'organe anticouple peut être notamment causée par l'utilisation d'un moteur générant une puissance importante pour permettre au rotor principal de maintenir le giravion à son altitude courante, et plus particulièrement lors de phases de vol à hautes altitudes où l'air environnant présente une faible densité.

Plus précisément, il a donc été remarqué que la marge de puissance disponible au niveau de l'organe anticouple diminue avec l'altitude à laquelle le giravion effectue sa mission. Lorsque cette marge de puissance disponible devient trop faible, il peut en résulter une dégradation des performances de contrôle ou de manœuvrabilité du giravion qui peut se produire par exemple lors d'une phase de vol stationnaire à haute altitude.

La présente invention a alors pour objet de proposer l'utilisation d'un dispositif de surveillance d'une marge de poussée disponible d'un organe anticouple d'un giravion en fonction de conditions de vol. De cette manière le pilote peut appréhender et conserver une certaine marge au niveau de l'organe de commande permettant par exemple de modifier simultanément un pas dit collectif des pales du rotor arrière ou de modifier la poussée d'au moins une hélice propulsive. Un tel organe de commande peut comprendre un palonnier et est actionné par le pilote en exerçant un effort de poussée au moyen de son pied gauche et de son pied droit sur deux pédales du palonnier.

L'invention se rapporte donc à un dispositif de surveillance d'une marge de poussée disponible d'un organe anticouple d'un giravion en fonction de conditions de vol, le giravion comportant une installation motrice entrainant en rotation au moins un rotor principal participant au moins à la sustentation du giravion dans les airs, l'organe anticouple participant au contrôle des mouvements en lacet du giravion.

Ce dispositif est remarquable en ce qu'il comporte :
- un calculateur configuré pour calculer une valeur courante d'un paramètre de fonctionnement représentatif de la marge de poussée de l'organe anticouple, le paramètre de fonctionnement étant fonction d'un rapport entre une puissance disponible de l'installation motrice et au moins un paramètre physico-chimique représentatif d'une densité de l'air extérieur environnant,
- des moyens de comparaison configurés pour comparer la valeur courante du paramètre de fonctionnement avec une valeur de seuil prédéterminée du paramètre de fonctionnement et pour déterminer la marge de poussée disponible de l'organe anticouple.

Autrement dit, un tel dispositif de surveillance permet à un pilote de comparer la valeur courante du paramètre de fonctionnement déterminée par les moyens de comparaison avec une valeur de seuil prédéterminée ou valeur limite.

En outre, la poussée générée par l'organe anticouple permet de stabiliser la position du giravion autour d'un axe de lacet. Un tel organe anticouple peut avantageusement être formé par un ou plusieurs rotors arrières, deux hélices propulsives ou tractives ou les volets mobiles permettant d'orienter latéralement un flux de gaz en sortie d'une poutre de queue.

Ainsi, le dispositif de surveillance selon l'invention permet au pilote du giravion de conserver un minimum de marge de poussée disponible au niveau de l'organe anticouple pour contrôler les mouvements du giravion et éventuellement pour maintenir en position le giravion lors d'une phase stationnaire.

Le calculateur et les moyens de comparaison peuvent être avantageusement embarqués à bord du giravion. Une alternative peut également consister à déporter au sol le calculateur et les moyens de comparaison par exemple lorsque le giravion est contrôlé à distance par un pilote depuis un poste de pilotage non embarqué.

En outre, une telle valeur de seuil prédéterminée du paramètre de fonctionnement peut être constante ou variable. En effet, selon le type de giravion, et plus précisément selon le type de commande d'un rotor principal de giravion, la valeur de seuil prédéterminée du paramètre de fonctionnement peut varier dans le temps.

Par exemple, lorsque la vitesse de rotation NR du rotor principal est variable autour d'une valeur nominale, la valeur de seuil prédéterminée du paramètre de fonctionnement peut également varier en fonction d'une valeur courante de la vitesse de rotation NR. Il en résulte que la marge de poussée disponible de l'organe anticouple est alors également variable en fonction de la valeur courante de la vitesse de rotation NR.

En pratique, le calculateur du dispositif de surveillance peut être relié par voie filaire ou non filaire à des capteurs et/ou à au moins un autre calculateur permettant de mesurer ou de calculer une puissance disponible de l'installation motrice.

Par exemple, la puissance disponible de l'installation motrice peut être déterminée à partir d'un système de régulation dit "système FADEC », acronyme de l'expression anglaise "Full Authority Digital Engine Control". Ce système FADEC permet en effet de calculer la puissance disponible de l'installation motrice via des paramètres de couple moteur TQ et de vitesse de rotation N2 d'une turbine libre par exemple en présence d'un turbomoteur.

De plus, le calculateur du dispositif de surveillance peut également être relié par voie filaire ou non filaire à des capteurs et/ou à au moins un autre calculateur permettant de mesurer le ou les paramètres physico-chimiques représentatifs de la densité de l'air extérieur à proximité du giravion et/ou de calculer cette densité de l'air.

Selon un exemple de réalisation, la densité de l'air peut être calculée par un calculateur dit "avionique" du giravion et est transmise au calculateur du dispositif de surveillance. De façon générale, des capteurs de pression de l'air et/ou de température de l'air et/ou d'hygrométrie permettant de mesurer le ou les paramètres physico-chimiques représentatifs de la densité de l'air peuvent alors être reliés au calculateur avionique. Par ailleurs, le paramètre de fonctionnement peut préférentiellement être proportionnel, voire égal, au rapport entre la puissance disponible de l'installation motrice et la densité de l'air extérieur environnant.

En outre, un tel calculateur du dispositif de surveillance peut comprendre par exemple au moins un ordinateur, un processeur, au moins un circuit intégré, au moins un système programmable, au moins un circuit logique, ces exemples ne limitant pas la portée donnée à l'expression « calculateur ». Les termes d'ordinateur ou de processeur peuvent désigner aussi bien une unité centrale de traitement connue sous l'acronyme CPU, une unité graphique de traitement GPU, une unité digitale connue sous l'acronyme DSP, un microcontrôleur...

Avantageusement, le dispositif peut comporter au moins un instrument de bord permettant d'informer un pilote du giravion en générant une information de pilotage représentative d'au moins la marge de poussée disponible de l'organe anticouple.

Par exemple, le pilote du giravion peut visualiser sur le ou les instruments de bord du dispositif de surveillance la valeur courante du paramètre de fonctionnement et la valeur de seuil prédéterminée. Le pilote peut ainsi visualiser une évolution de la marge de poussée disponible en regardant le ou les instruments de bord permettant par exemple de donner une représentation visuelle de la valeur courante du paramètre de fonctionnement et de la valeur de seuil prédéterminée afin que le pilote évalue la marge de manœuvrabilité de contrôle des mouvements en lacet.

En outre, différents types d'instruments de bord peuvent permettre de fournir cette information représentative de la marge de poussée disponible de l'organe anticouple.

Selon un premier exemple de réalisation de l'invention, le ou les instruments de bord peuvent être configurés pour générer l'information de pilotage représentative uniquement de la marge de poussée disponible de l'organe anticouple.

Dans ce cas, le ou les instruments de bord sont donc dédiés pour fournir l'information de pilotage représentative de seulement la marge de poussée disponible de l'organe anticouple. Le pilote du giravion peut donc instantanément connaitre la marge de poussée disponible de l'organe anticouple en portant son regard sur ce ou ces instruments de bord dédiés.

Selon un second exemple de réalisation de l'invention, le ou les instruments de bord peuvent être configurés pour générer l'information de pilotage représentative d'une part de la marge de poussée disponible de l'organe anticouple et d'autre part d'au moins une autre marge choisie parmi le groupe comportant une marge de température des gaz à une entrée d'une turbine libre basse pression d'un moteur de l'installation motrice, une marge de vitesse de rotation d'un générateur de gaz du moteur de l'installation motrice et une marge d'un couple exercé sur un arbre de sortie du moteur de l'installation motrice.

Dans cet autre cas, le ou les instruments de bord du dispositif de surveillance selon l'invention peuvent de donner une information de pilotage représentative de l'une des quatre marges précédentes.

Un tel agencement permet ainsi notamment d'informer un pilote de giravion sur un même instrument de bord. Un écran de contrôle permet par exemple d'afficher simultanément ou alternativement des informations de pilotage représentatives des différentes marges telles que la marge de poussée disponible de l'organe anticouple, la marge de température des gaz à une entrée d'une turbine libre basse pression d'un moteur de l'installation motrice, la marge de vitesse de rotation d'un générateur de gaz du moteur de l'installation motrice et la marge d'un couple exercé sur un arbre de sortie du moteur de l'installation motrice .

Avantageusement, l'information de pilotage peut être une information de première limitation représentative d'une valeur minimale choisie parmi la marge de poussée disponible de l'organe anticouple, une marge de température des gaz à l'entrée de la turbine libre basse pression, une marge de vitesse de rotation du générateur de gaz et une marge du couple exercé sur l'arbre de sortie.

Dans ce cas, la charge de travail du pilote reste alors identique puisque le pilote peut visualiser sur un seul et même instrument de bord une marge considérée comme étant la plus critique entre la marge de poussée disponible de l'organe anticouple, la marge de température des gaz à l'entrée d'une turbine libre basse pression d'un moteur de l'installation motrice, la marge de vitesse de rotation d'un générateur de gaz du moteur de l'installation motrice et la marge de couple exercé sur l'arbre de sortie du moteur de l'installation motrice.

En outre, la surveillance de la marge de poussée disponible de l'organe anticouple permet à cette information de première limitation de lier de manière cohérente entre elles la marge du palonnier représentative d'une marge de manœuvrabilité et la marge de puissance disponible représentative d'une limite moteur et évite ainsi une potentielle mise en situation délicate induite par un manque de marge du palonnier.

De plus, la masse du giravion peut être réduite en évitant une multiplication d'instruments de bord dédiés à plusieurs dispositifs de surveillance disjoints.

Selon un autre aspect, une mémoire peut stocker au moins trois valeurs de seuil prédéterminées distinctes du paramètre de fonctionnement, les au moins trois valeurs de seuil prédéterminées étant respectivement relatives à au moins trois régimes de l'installation motrice, les au moins trois régimes comportant un régime de décollage dudit giravion, un régime maximal en continu et un régime transitoire.

De cette manière, le dispositif de surveillance permet d'adapter la valeur de seuil prédéterminée en fonction d'une phase de vol L'invention se rapporte également à un giravion comportant une installation motrice entrainant en rotation au moins un rotor principal participant au moins à la sustentation du giravion, le giravion comportant également un organe anticouple participant au contrôle des mouvements en lacet du giravion.

Un tel giravion est remarquable en ce qu'il comporte un dispositif de surveillance tel que précédemment décrit pour surveiller une marge de poussée disponible de l'organe anticouple en fonction de conditions de vol.

Autrement dit, le giravion conforme à l'invention comporte alors un calculateur pour calculer une valeur courante d'un paramètre de fonctionnement représentatif de la marge de poussée de l'organe anticouple, ce paramètre de fonctionnement étant fonction d'un rapport entre une puissance disponible de l'installation motrice du giravion et au moins un paramètre physico-chimique représentatif d'une densité de l'air extérieur environnant.

Le giravion comporte également des moyens de comparaison pour comparer la valeur courante du paramètre de fonctionnement avec une valeur de seuil prédéterminée du paramètre de fonctionnement, ces moyens de comparaison permettant de déterminer la marge de poussée disponible de l'organe anticouple.

La présente invention a aussi pour objet un procédé de surveillance d'une marge de poussée disponible d'un organe anticouple d'un giravion en fonction de conditions de vol, le giravion comportant une installation motrice entrainant en rotation au moins un rotor principal participant au moins à la sustentation du giravion, l'organe anticouple participant quant à lui au contrôle des mouvements en lacet du giravion.

Selon l'invention, un tel procédé de surveillance est remarquable en ce qu'il comporte les étapes suivante :
- calcul pour calculer une valeur courante d'un paramètre de fonctionnement représentatif de la marge de poussée de l'organe anticouple, le paramètre de fonctionnement étant fonction d'un rapport entre une puissance disponible de l'installation motrice et au moins un paramètre physico-chimique représentatif d'une densité de l'air extérieur environnant,
- comparaison de la valeur courante du paramètre de fonctionnement avec une valeur de seuil prédéterminée du paramètre de fonctionnement, l'étape de comparaison permettant de déterminer la marge de poussée disponible de l'organe anticouple.

En d'autres termes, le procédé de surveillance permet de calculer à tout instant le paramètre de fonctionnement en fonction d'un rapport entre la puissance disponible de l'installation motrice et le ou les paramètres physico-chimiques représentatifs de la densité de l'air extérieur environnant. Une telle étape de calcul du procédé peut donc être réalisée à intervalle de temps régulier automatiquement par le procédé de surveillance conforme à l'invention.

L'étape de comparaison pour comparer la valeur courante du paramètre de fonctionnement avec la valeur de seuil prédéterminée du paramètre de fonctionnement est quant à elle effectuée en temps réel et donc à intervalle de temps régulier lors d'une mission du giravion de façon à garantir une surveillance optimale de la marge de poussée disponible au niveau de l'organe anticouple.

Avantageusement, le procédé de surveillance peut comporter une étape d'information permettant d'informer un pilote du giravion comprenant une génération d'une information de pilotage représentative d'au moins la marge de poussée disponible de l'organe anticouple.

Une telle étape d'information permet ainsi au pilote du giravion de pouvoir visualiser à tout instant la marge courante de poussée disponible de l'organe anticouple. Le pilote peut ainsi visualiser toute évolution de la marge de poussée et procéder à des actions correctives de pilotage lui permettant d'agir sur la valeur courante du paramètre de fonctionnement pour que cette valeur courante ne dépasse pas la valeur de seuil prédéterminée.

Selon une première variante du procédé de surveillance, lors de l'étape d'information, l'information de pilotage peut être représentative uniquement de la marge de poussée disponible de l'organe anticouple.

Comme précédemment, une telle étape d'information opérée au moyen du ou des instruments de bord permet ainsi de générer l'information de pilotage représentative uniquement de la marge de poussée disponible de l'organe anticouple. Le pilote visualise donc instantanément la marge de poussée disponible de l'organe anticouple en regardant ce ou ces instruments de bord dédiés.

Selon une seconde variante du procédé de surveillance, lors l'étape d'information, l'information de pilotage peut être représentative d'une part de la marge de poussée disponible de l'organe anticouple et d'autre part d'au moins une autre marge choisie parmi le groupe comportant une marge de température des gaz à une entrée d'une turbine libre basse pression d'un moteur de l'installation motrice, une marge de vitesse de rotation d'un générateur de gaz du moteur de l'installation motrice et une marge d'un couple exercé sur un arbre de sortie du moteur de l'installation motrice.

Dans cette seconde variante, l'affichage de différentes marges peut ainsi être réalisé sur un même instrument de bord. Un écran de contrôle commun permet ainsi par exemple de générer simultanément ou encore alternativement des informations de pilotage représentatives des différentes marges précitées.

En outre, la masse du giravion peut être réduite en évitant une multiplication d'instruments de bord dédiés à plusieurs procédés de surveillance.

Selon un autre aspect, l'information de pilotage peut être une information de première limitation représentative d'une valeur minimale choisie parmi la marge de poussée disponible de l'organe anticouple, une marge de température des gaz à l'entrée de la turbine libre basse pression, une marge de vitesse de rotation du générateur de gaz et une marge du couple exercé sur l'arbre de sortie.

Autrement dit, lorsque la marge de poussée disponible de l'organe anticouple n'est pas critique comparativement à au moins une autre marge, l'information de première limitation générée à l'étape d'information peut, au moins temporairement, être représentative de la marge de température des gaz à l'entrée de la turbine libre basse pression, de la marge de vitesse de rotation du générateur de gaz ou de la marge du couple exercé sur l'arbre de sortie.

En outre, le procédé peut également comporter une étape de stockage permettant de stocker dans une mémoire au moins une valeur de seuil prédéterminée du paramètre de fonctionnement. Cette étape de stockage peut être opérée préalablement à une mission du giravion. Dans ce cas, c'est un pilote ou un copilote du giravion qui peut réaliser manuellement une telle étape de stockage.

Selon une alternative, une telle étape de stockage peut également être effectuée lors d'une opération de maintenance ou encore à l'usine de fabrication du giravion et donc préalablement à la réception du giravion. Selon cette alternative, l'étape de stockage peut donc ne pas être mise en œuvre par un pilote ou un copilote du giravion.

En pratique, une telle étape de stockage peut permettre de stocker au moins trois valeurs de seuil prédéterminées distinctes du paramètre de fonctionnement, les au moins trois valeurs de seuil prédéterminées étant respectivement relatives à au moins trois régimes de l'installation motrice, les au moins trois régimes comportant un régime de décollage du giravion, un régime maximal en continu et un régime transitoire.

De cette manière, une telle étape de stockage permet d'adapter la comparaison de la valeur courante de la marge de poussée disponible de l'organe anticouple en fonction d'au moins trois régimes de l'installation motrice tels que par exemple le régime de décollage du giravion, le régime maximal en continu et le régime transitoire.

Dans ce cas, l'étape de comparaison permet de comparer la valeur courante du paramètre de fonctionnement avec l'une des au moins trois valeurs de seuil prédéterminée du paramètre de fonctionnement stockées dans la mémoire lors de l'étape de stockage.

L'invention et ses avantages apparaîtront avec plus de détails dans le cadre de la description qui suit avec des exemples donnés à titre illustratif en référence aux figures annexées qui représentent :
[Fig 1] la figure 1, une vue de côté d'un giravion conforme à l'invention,
[Fig 2] la figure 2, un schéma de principe d'un dispositif de surveillance selon un premier exemple de réalisation de l'invention,
[Fig 3] la figure 3, un schéma de principe d'un dispositif de surveillance selon un second exemple de réalisation de l'invention,
[Fig 4] la figure 4, un exemple particulier d'instrument de bord d'un dispositif de surveillance conforme à l'invention, et
[Fig 5] la figure 5, un premier logigramme illustrant une première réalisation avantageuse d'un procédé de surveillance conforme à l'invention, et
[Fig 6] la figure 6, un second logigramme illustrant une seconde réalisation avantageuse d'un procédé de surveillance conforme à l'invention.

Les éléments présents dans plusieurs figures distinctes sont affectés d'une seule et même référence.

Comme déjà évoqué, l'invention se rapporte donc au domaine technique des giravions et aux dispositifs de surveillance visant à faciliter le pilotage de ce type d'aéronefs.

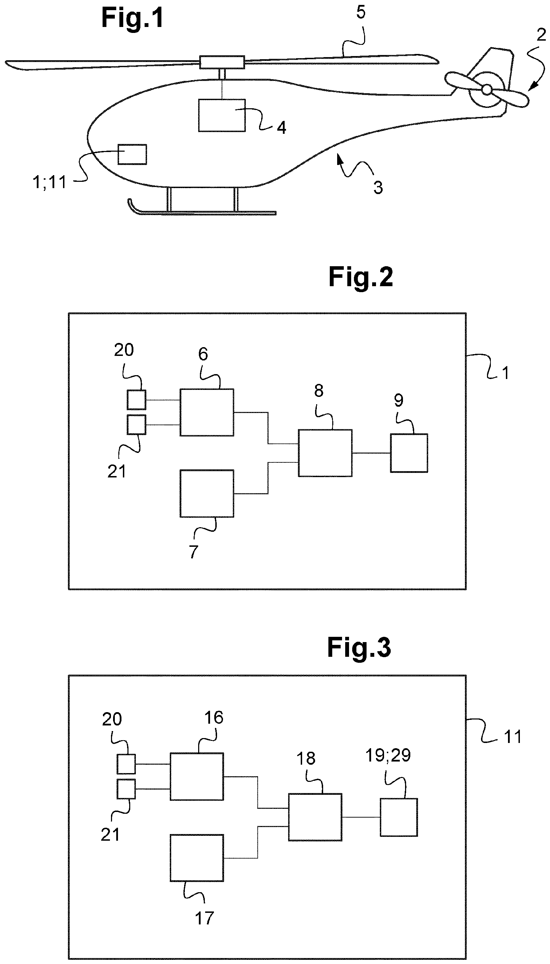

Tel que représenté à la figure 1, un giravion 3 comporte une installation motrice 4 et au moins un rotor principal 5 entrainé en rotation par cette installation motrice 4. L'installation motrice 4 peut notamment comporter au moins un moteur thermique ou électrique et au moins une boite de transmission de puissance principale.

Le rotor principal 5 participe ainsi au moins à la sustentation du giravion 3 dans les airs. Un organe anticouple 2, formé par exemple par un rotor arrière est agencé au niveau d'une poutre de queue. Cet organe anticouple 2 participe quant à lui au contrôle des mouvements en lacet du giravion 3. L'organe anticouple 2 permet également de contrôler le couple généré par la rotation du rotor principal 5 et transmis au fuselage du giravion 3.

Selon une autre variante, l'organe anticouple 2 peut également être formé par des hélices propulsives ou tractives agencées sur une aile s'étendant transversalement par rapport à un plan médian vertical antéropostérieur du giravion 3. Au moins une hélice propulsive ou tractive gauche peut alors être agencée au niveau d'un côté gauche par rapport au plan médian vertical antéropostérieur et/ou au moins une hélice propulsive ou tractive droite peut être agencée au niveau d'un côté droit par rapport au plan médian vertical antéropostérieur.

Selon encore une autre variante, l'organe anticouple 2 peut également comporter au moins un volet mobile permettant d'orienter latéralement un flux de gaz en sortie d'une poutre de queue. Un tel organe anticouple 2 est généralement désigné par l'abréviation "NOTAR" se rapportant à l'expression en langue anglaise "NO TAil Rotor" et signifiant que le giravion ne présente pas de rotor arrière agencée au niveau d'une poutre de queue.

Un tel giravion 3 comporte également un dispositif 1, 11 de surveillance d'une marge de poussée disponible de l'organe anticouple 2 du giravion 3 en fonction des conditions de vol. Un tel dispositif 1, 11 est ainsi configuré pour surveiller à tout instant la marge de poussée disponible au niveau de l'organe anticouple 2.

Une telle marge de poussée disponible est donc calculée à tout instant en comparant une valeur courante d'un paramètre de fonctionnement avec une valeur de seuil prédéterminée de ce paramètre de fonctionnement.

Ainsi selon deux exemples de réalisation de l'invention représentés aux figures 2 et 3, un tel dispositif de surveillance 1, 11 comporte un calculateur 6, 16 pour calculer la valeur courante du paramètre de fonctionnement représentatif de la marge de poussée de l'organe anticouple 2. En outre, un tel paramètre de fonctionnement est fonction d'un rapport entre une puissance disponible de l'installation motrice 4 et au moins un paramètre physico-chimique représentatif d'une densité de l'air extérieur environnant. Préférentiellement, le paramètre de fonctionnement peut être proportionnel, voire égal, au rapport entre la puissance disponible de l'installation motrice 4 et la densité de l'air.

En pratique, la puissance disponible de l'installation motrice 4 peut être déterminée au moyen d'un système FADEC du giravion 3, via des capteurs mesurant par exemple des paramètres de couple moteur TQ et de vitesse de rotation N2 d'une turbine libre équipant un turbomoteur de l'installation motrice 4.

Par ailleurs, le calculateur 6, 16 du dispositif de surveillance 1, 11 peut également être connecté par voie filaire ou non filaire à un ou plusieurs capteurs 20 et/ou à au moins un autre calculateur 21 permettant de mesurer le ou les paramètres physico-chimiques représentatifs de la densité de l'air ou de calculer la densité de l'air extérieur à proximité du giravion 3.

Selon un exemple de réalisation, la densité de l'air peut être calculée par un calculateur avionique équipant le giravion 3 à partir notamment de données captées par des senseurs mesurant la pression, la température et/ou l'hygrométrie de l'air environnant. La densité de l'air est alors calculée et peut être ensuite transmise au calculateur 6, 16 du dispositif de surveillance 1, 11.

En outre, un tel calculateur 6, 16 du dispositif de surveillance 1, 11 peut comprendre par exemple au moins un ordinateur, un processeur, au moins un circuit intégré, au moins un système programmable, au moins un circuit logique, ces exemples ne limitant pas la portée donnée à l'expression « calculateur ». Les termes d'ordinateur ou de processeur peuvent désigner aussi bien une unité centrale de traitement connue sous l'acronyme CPU, une unité graphique de traitement GPU, une unité digitale connue sous l'acronyme DSP, un microcontrôleur...

Un tel paramètre de fonctionnement représentatif de la marge de poussée de l'organe anticouple 2 peut par exemple être désigné par une puissance disponible réduite.

En outre, le dispositif de surveillance 1, 11 peut comporter également une mémoire 7, 17 ou équivalent pour stocker au moins une valeur de seuil prédéterminée du paramètre de fonctionnement. Une telle mémoire 7, 17 est avantageusement embarquée à bord du giravion 3 et peut être une mémoire de type accessible en lecture et, sous certaines conditions, modifiable en écriture par un pilote du giravion ou bien être de type protégée en écriture et non modifiable par un pilote du giravion 3.

Une telle valeur de seuil prédéterminée du paramètre de fonctionnement est par exemple déterminée par calculs, simulations et/ou essais en vol préalablement à la mission du giravion 3, voire à la commercialisation du giravion 3. Par exemple, la valeur de seuil prédéterminée du paramètre de fonctionnement peut être une puissance disponible réduite comprise entre 500 kW et 1000 kW, et préférentiellement entre 600 kW et 800 kW. En outre, une telle valeur de seuil prédéterminée du paramètre de fonctionnement est propre à chaque type de giravion et peut également être adaptée en fonction d'un type de mission particulier.

De plus, le dispositif de surveillance 1, 11 comporte des moyens de comparaison 8, 18 connectés par voie filaire ou non filaire à la fois au calculateur 6, 16 et à la mémoire 7, 17. De tels moyens de comparaison 8, 18 sont alors configurés pour comparer la valeur courante du paramètre de fonctionnement avec la valeur de seuil prédéterminée du paramètre de fonctionnement. Les moyens de comparaison 8, 18 permettent alors de déterminer la marge de poussée disponible de l'organe anticouple 2.

Au surplus, le dispositif 1, 11 peut avantageusement comporter au moins un instrument de bord 9, 19, 29 permettant de générer au moins une information de pilotage représentative de cette marge de poussée disponible de l'organe anticouple 2.

Un tel instrument de bord 9, 19, 29 peut par exemple comporter un écran, un cadran, une jauge, un ou plusieurs voyants lumineux, des diodes ou tout instrument de bord en général.

Selon un premier exemple de réalisation de l'invention représenté à la figure 2, l'instrument de bord 9 peut être configuré pour générer une information de pilotage représentative exclusivement de la marge de poussée disponible de l'organe anticouple 2. Ainsi, le pilote du giravion 3 peut à tout instant connaitre la marge de poussée disponible de l'organe anticouple 2 en regardant l'information de pilotage affichée constamment sur l'instrument de bord 9.

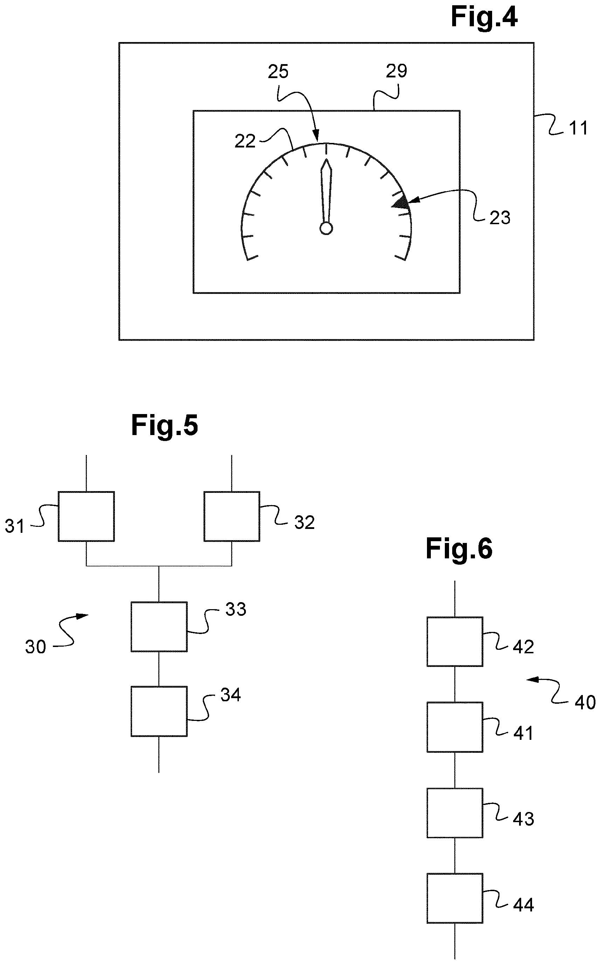

Selon un second exemple de réalisation de l'invention représenté aux figures 3 et 4, l'instrument de bord 19, 29 peut quant à lui être configuré pour générer une information de pilotage représentative d'une part de la marge de poussée disponible de l'organe anticouple 2 et d'autre part d'au moins une autre marge.

En outre, une telle autre marge peut par exemple être choisie parmi le groupe comportant une marge de température des gaz à une entrée d'une turbine libre basse pression d'un moteur de l'installation motrice 4, une marge de vitesse de rotation d'un générateur de gaz du moteur de l'installation motrice 4 et une marge d'un couple exercé sur un arbre de sortie du moteur de l'installation motrice 4.

Ainsi, l'instrument de bord 19 peut par exemple générer simultanément des informations de pilotage représentatives de plusieurs marges distinctes les unes des autres.

L'instrument de bord 29 peut quant à lui générer une information de pilotage représentative d'une une marge minimale parmi les différentes marges et donc celle étant considérée comme étant la plus critique pour le pilotage du giravion 3.

Dans ce cas, l'instrument de bord 29 peut générer une information de pilotage se présentant sous la forme d'une information de première limitation représentative d'une valeur minimale choisie parmi la marge de poussée disponible de l'organe anticouple 2, une marge de température des gaz à l'entrée de la turbine libre basse pression, une marge de vitesse de rotation du générateur de gaz et une marge du couple exercé sur l'arbre de sortie.

Un dispositif de surveillance 11 comportant un tel instrument de bord 29 permet ainsi d'identifier, parmi les paramètres de surveillance de la poussée disponible de l'organe anticouple 2 et du turbomoteur, celui qui est le plus proche de sa limite. Les informations relatives aux limitations à respecter sont ainsi regroupées sur un repère unique 22, en permettant, d'une part, d'effectuer une synthèse et de présenter uniquement le résultat de cette synthèse afin de simplifier la tâche du pilote et, d'autre part, de gagner de la place sur la planche de bord. On obtient ainsi un "paramètre limitant", parmi les paramètres de surveillance de la poussée disponible de l'organe anticouple 2 et du turbomoteur, dont la valeur courante 25 est maximale ou la plus proche de la valeur de seuil prédéterminée 23 pour ce paramètre. Pour cette raison, on désigne un tel dispositif de surveillance 11 par l'expression "instrument de première limitation", en abrégé "IPL". Cet instrument de première limitation permet donc de connaître la valeur courante 25 à un instant donné du paramètre limitant. La charge de travail du pilote est considérablement diminuée puisqu'il se contente désormais d'utiliser un unique instrument de bord 29 pour surveiller plusieurs paramètres distincts.

Avantageusement, la mémoire 17 peut quant à elle stocker au moins trois valeurs de seuil prédéterminées distinctes du paramètre de fonctionnement. Dans ce cas, ces au moins trois valeurs de seuil prédéterminées sont respectivement relatives à au moins trois régimes de l'installation motrice 4, les au moins trois régimes comportant un régime de décollage du giravion 3, un régime maximal en continu et un régime transitoire.

A titre d'exemple non limitatif, une première valeur de seuil prédéterminée correspondant au régime de décollage du giravion 3 peut être une puissance disponible réduite comprise entre 600 kW et 700 kW, une seconde valeur de seuil prédéterminée correspondant au régime maximal en continu du giravion 3 peut être une puissance disponible réduite comprise entre 650 kW et 750 kW et une troisième valeur de seuil prédéterminée correspondant à un régime transitoire du giravion 3 peut être une puissance disponible réduite comprise entre 700 kW et 800 kW.

Telle que représentée aux figures 5 et 6, l'invention se rapporte également à un procédé 30, 40 de surveillance d'une marge de poussée disponible de l'organe anticouple 2 du giravion 3 en fonction de conditions de vol.

Ainsi, le procédé 30, 40 comporte une étape de calcul 31, 41 pour calculer une valeur courante d'un paramètre de fonctionnement représentatif de cette marge de poussée de l'organe anticouple 2. Comme déjà indiqué, ce paramètre de fonctionnement est fonction d'un rapport entre une puissance disponible de l'installation motrice 4 et au moins un paramètre physico-chimique représentatif d'une densité de l'air extérieur environnant.

En outre, le procédé 30, 40 peut comporter aussi une étape de stockage 32, 42 de manière à enregistrer dans la mémoire 7, 17 au moins une valeur de seuil prédéterminée du paramètre de fonctionnement.

Par ailleurs, le procédé 30, 40 comporte également une étape de comparaison 33, 43 pour comparer la valeur courante du paramètre de fonctionnement avec la valeur de seuil prédéterminée du paramètre de fonctionnement, cette étape de comparaison 33, 43 permettant de déterminer par calcul la marge de poussée disponible de l'organe anticouple 2.

Enfin, un tel procédé 30, 40 de surveillance peut comporter une étape d'information 34, 44 pour générer sur au moins un instrument de bord 9, 19, 29 au moins une information de pilotage représentative de la marge de poussée disponible de l'organe anticouple 2.

Selon une première variante du procédé de surveillance 30 représentée à la figure 5, cette étape d'information 34 peut être mise en œuvre par un instrument de bord 9 qui permet de générer l'information de pilotage représentative exclusivement de la marge de poussée disponible de l'organe anticouple 2.

Telles que représentées à la figure 5, l'étape de calcul 31 et l'étape de stockage 32 peuvent par exemple être mises en œuvre en parallèle l'une indépendamment de l'autre mais préalablement aux étapes de comparaison 33 et d'information 34.

Selon une seconde variante du procédé de surveillance 40 représentée à la figure 6, l'étape d'information 44 peut également être mise en œuvre par un instrument de bord 19 générant une information de pilotage à partir de données représentatives de la marge de poussée disponible de l'organe anticouple 2 et d'au moins une autre marge.

En outre, cet autre marge est avantageusement choisie parmi le groupe comportant une marge de température des gaz à une entrée d'une turbine libre basse pression d'un moteur de l'installation motrice 4, une marge de vitesse de rotation d'un générateur de gaz du moteur de l'installation motrice 4 et une marge d'un couple exercé sur un arbre de sortie du moteur de l'installation motrice 4.

Dans ce cas et telles que représentées à la figure 6, l'étape de stockage 42 peut par exemple être mise en œuvre en série préalablement à l'étape de calcul 41, cette étape de calcul 41 étant elle-même mise en œuvre en série préalablement aux étapes de comparaison 43 et d'information 44.

En outre, une telle étape de stockage 42 permet par exemple de stocker au moins trois valeurs de seuil prédéterminées distinctes du paramètre de fonctionnement, les au moins trois valeurs de seuil prédéterminées étant respectivement relatives à au moins trois régimes de l'installation motrice 4, les au moins trois régimes comportant un régime de décollage du giravion 3, un régime maximal en continu et un régime transitoire.

Naturellement, la présente invention est sujette à de nombreuses variations quant à sa mise en oeuvre, sans sortir du cadre de la présente invention comme défini par les revendications. Bien que plusieurs modes de réalisation aient été décrits, on comprend bien qu'il n'est pas concevable d'identifier de manière exhaustive tous les modes possibles.

## Revendications

1. Dispositif (1, 11) de surveillance d'une marge de poussée disponible d'un organe anticouple (2) d'un giravion (3) en fonction de conditions de vol, ledit giravion (3) comportant une installation motrice (4) entrainant en rotation au moins un rotor principal (5) participant au moins à la sustentation dudit giravion (3), ledit organe anticouple (2) participant au contrôle des mouvements en lacet dudit giravion (3),
**caractérisé en ce que** ledit dispositif (1, 11) comporte :
• un calculateur (6, 16) configuré pour calculer une valeur courante d'un paramètre de fonctionnement représentatif de ladite marge de poussée dudit organe anticouple (2), ledit paramètre de fonctionnement étant fonction d'un rapport entre une puissance disponible de ladite installation motrice (4) et au moins un paramètre physico-chimique représentatif d'une densité de l'air extérieur environnant, et
• des moyens de comparaison (8, 18) configurés pour comparer ladite valeur courante dudit paramètre de fonctionnement avec une valeur de seuil prédéterminée dudit paramètre de fonctionnement et pour déterminer ladite marge de poussée disponible dudit organe anticouple (2).

2. Dispositif selon la revendication 1,
**caractérisé en ce que** ledit dispositif (1, 11) comporte au moins un instrument de bord (9, 19, 29) permettant d'informer un pilote dudit giravion (3) en générant une information de pilotage représentative d'au moins ladite marge de poussée disponible dudit organe anticouple (2).

3. Dispositif selon la revendication 2,
**caractérisé en ce que** ledit au moins un instrument de bord (9) est configuré pour générer ladite information de pilotage représentative uniquement de ladite marge de poussée disponible dudit organe anticouple (2).

4. Dispositif selon la revendication 2,
**caractérisé en ce que** ledit au moins un instrument de bord (19, 29) est configuré pour générer ladite information de pilotage représentative d'une part de ladite marge de poussée disponible dudit organe anticouple (2) et d'autre part d'au moins une autre marge choisie parmi le groupe comportant une marge de température des gaz à une entrée d'une turbine libre basse pression d'un moteur de ladite installation motrice (4), une marge de vitesse de rotation d'un générateur de gaz dudit moteur de ladite installation motrice (4) et une marge d'un couple exercé sur un arbre de sortie dudit moteur de ladite installation motrice (4).

5. Dispositif selon la revendication 4,
**caractérisé en ce que** ladite information de pilotage est une information de première limitation représentative d'une valeur minimale choisie parmi ladite marge de poussée disponible dudit organe anticouple (2), ladite marge de température des gaz à ladite entrée de ladite turbine libre basse pression, ladite marge de vitesse de rotation dudit générateur de gaz et ladite marge dudit couple exercé sur ledit arbre de sortie.

6. Dispositif selon l'une quelconque des revendications 1 à 5, **caractérisé en ce que** une mémoire (17) stocke au moins trois valeurs de seuil prédéterminées distinctes dudit paramètre de fonctionnement, lesdites au moins trois valeurs de seuil prédéterminées étant respectivement relatives à au moins trois régimes de ladite installation motrice (4), lesdits au moins trois régimes comportant un régime de décollage dudit giravion (3), un régime maximal en continu et un régime transitoire.

7. Giravion (3) comportant une installation motrice (4) entrainant en rotation au moins un rotor principal (5) participant au moins à la sustentation dudit giravion (3), ledit giravion (3) comportant un organe anticouple (2) participant au contrôle des mouvements en lacet dudit giravion (3),
**caractérisé en ce que** ledit giravion (3) comporte un dispositif (1, 11) de surveillance selon l'une quelconque des revendications 1 à 6 pour surveiller une marge de poussée disponible dudit organe anticouple (2) en fonction de conditions de vol.

8. Procédé (30, 40) de surveillance d'une marge de poussée disponible d'un organe anticouple (2) d'un giravion (3) en fonction de conditions de vol, ledit giravion (3) comportant une installation motrice (4) entrainant en rotation au moins un rotor principal (5), participant au moins à la sustentation dudit giravion (3), ledit organe anticouple (2) participant au contrôle des mouvements en lacet dudit giravion (3),
**caractérisé en ce que** ledit procédé (30, 40) comporte les étapes suivantes :
• calcul (31, 41) d'une valeur courante d'un paramètre de fonctionnement représentatif de ladite marge de poussée dudit organe anticouple (2), ledit paramètre de fonctionnement étant fonction d'un rapport entre une puissance disponible de ladite installation motrice (4) et au moins un paramètre physico-chimique représentatif d'une densité de l'air extérieur environnant, et
• comparaison (33, 43) de ladite valeur courante dudit paramètre de fonctionnement avec une valeur de seuil prédéterminée dudit paramètre de fonctionnement, ladite étape de comparaison (33, 43) permettant de déterminer ladite marge de poussée disponible dudit organe anticouple (2).

9. Procédé selon la revendication 8,
**caractérisé en ce que** ledit procédé (30, 40) de surveillance comporte une étape d'information (34, 44) permettant d'informer un pilote dudit giravion (3) comprenant une génération d'une information de pilotage représentative d'au moins ladite marge de poussée disponible dudit organe anticouple (2).

10. Procédé selon la revendication 9,
**caractérisé en ce que** lors de ladite étape d'information (34), ladite information de pilotage est représentative uniquement de ladite marge de poussée disponible dudit organe anticouple (2).

11. Procédé selon la revendication 9,
**caractérisé en ce que** lors de ladite étape d'information (44), ladite information de pilotage est représentative d'une part de ladite marge de poussée disponible dudit organe anticouple (2) et d'autre part d'au moins une autre marge choisie parmi le groupe comportant une marge de température des gaz à une entrée d'une turbine libre basse pression d'un moteur de ladite installation motrice (4), une marge de vitesse de rotation d'un générateur de gaz dudit moteur de ladite installation motrice (4) et une marge d'un couple exercé sur un arbre de sortie dudit moteur de ladite installation motrice (4).

12. Procédé selon la revendication 11,
**caractérisé en ce que** ladite information de pilotage est une information de première limitation représentative d'une valeur minimale choisie parmi ladite marge de poussée disponible dudit organe anticouple (2), une marge de température des gaz à ladite entrée de ladite turbine libre basse pression, une marge de vitesse de rotation dudit générateur de gaz et une marge dudit couple exercé sur ledit arbre de sortie.

## Patentansprüche

1. Vorrichtung (1, 11) zur Überwachung eines verfügbaren Schubkraftspielraums eines Heckrotororgans (2) eines Drehflügelflugzeugs (3) in Abhängigkeit von Flugbedingungen, wobei das Drehflügelflugzeug (3) eine Triebwerksanlage (4) umfasst, die mindestens einen Hauptrotor (5) in Drehung versetzt, der zumindest am Auftrieb des Drehflügelflugzeugs (3) beteiligt ist, wobei das Heckrotororgan (2) an der Kontrolle der Gierbewegungen des Drehflügelflugzeugs (3) beteiligt ist,
**dadurch gekennzeichnet, dass** die Vorrichtung (1, 11) umfasst:
- einen Rechner (6, 16), der konfiguriert ist, einen aktuellen Wert eines für den Schubkraftspielraum des Heckrotororgans (2) repräsentativen Betriebsparameters zu berechnen, wobei der Betriebsparameter von einem Verhältnis zwischen einer verfügbaren Leistung der Triebwerksanlage (4) und mindestens einem für eine Dichte der umgebenden Außenluft repräsentativen physikalisch-chemischen Parameter abhängig ist, und
- Vergleichsmittel (8, 18), die konfiguriert sind, den aktuellen Wert des Betriebsparameters mit einem vorgegebenen Schwellenwert des Betriebsparameters zu vergleichen und den verfügbaren Schubkraftspielraum des Heckrotorelements (2) zu bestimmen.

2. Vorrichtung nach Anspruch 1, **dadurch gekennzeichnet, dass** die Vorrichtung (1, 11) mindestens ein Bordinstrument (9, 19, 29) umfasst, das es ermöglicht, einen Piloten des Drehflügelflugzeugs (3) zu informieren, indem es eine Steuerinformation erzeugt, die für mindestens den verfügbaren Schubkraftspielraum des Heckrotororgans (2) repräsentativ ist.

3. Vorrichtung nach Anspruch 2,
**dadurch gekennzeichnet, dass** das mindestens eine Bordinstrument (9) konfiguriert ist, die allein für den verfügbaren Schubkraftspielraum des Heckorgans (2) repräsentative Steuerinformation zu erzeugen.

4. Vorrichtung nach Anspruch 2,
**dadurch gekennzeichnet, dass** das mindestens eine Bordinstrument (19, 29) konfiguriert ist, die Steuerinformation zu erzeugen, die einerseits für den verfügbaren Schubkraftspielraum des Heckrotororgans (2) und andererseits für mindestens einen anderen Spielraum repräsentativ ist, der aus der Gruppe ausgewählt ist, die einen Spielraum der Temperatur der Gase an einem Eingang einer freien Niederdruckturbine eines Motors der Triebwerksanlage (4), einen Spielraum der Drehgeschwindigkeit eines Gasgenerators des Motors der Triebwerksanlage (4) und einen Spielraum eines Drehmoments, das auf eine Ausgangswelle des Motors der Triebwerksanlage (4) ausgeübt wird, umfasst.

5. Vorrichtung nach Anspruch 4,
**dadurch gekennzeichnet, dass** die Steuerinformation eine Erstbegrenzungsinformation ist, die repräsentativ für einen Minimalwert ist, der aus dem Spielraum der verfügbaren Schubkraft des Heckrotororgans (2), dem Spielraum der Temperatur der Gase am Eingang der freien Niederdruckturbine, dem Spielraum der Drehgeschwindigkeit des Gasgenerators und dem Spielraum des auf die Ausgangswelle ausgeübten Drehmoments ausgewählt ist.

6. Vorrichtung nach einem der Ansprüche 1 bis 5,
**dadurch gekennzeichnet, dass** ein Speicher (17) mindestens drei unterschiedliche, vorgegebene Schwellenwerte des Betriebsparameters speichert, wobei sich die mindestens drei vorgegebenen Schwellenwerte jeweils auf mindestens drei Betriebszustände der Triebwerksanlage (4) beziehen, wobei die mindestens drei Betriebszustände einen Startbetrieb des Drehflügelflugzeugs (3), einen kontinuierlichen Maximalbetrieb und einen Übergangsbetrieb umfassen.

7. Drehflügelflugzeug (3) mit einer Triebwerksanlage (4), die mindestens einen Hauptrotor (5) in Drehung versetzt, der zumindest am Auftrieb des Drehflügelflugzeugs (3) beteiligt ist, wobei das Drehflügelflugzeug (3) ein Heckrotororgan (2) aufweist, das an der Kontrolle der Gierbewegungen des Drehflügelflugzeugs (3) beteiligt ist,
**dadurch gekennzeichnet, dass** das Drehflügelflugzeug (3) eine Überwachungsvorrichtung (1, 11) nach einem der Ansprüche 1 bis 6 aufweist, um einen verfügbaren Schubkraftspielraum des Heckrotororgans (2) in Abhängigkeit von Flugbedingungen zu überwachen.

8. Verfahren (30, 40) zum Überwachen eines verfügbaren Schubkraftspielraums eines Heckrotororgans (2) eines Drehflügelflugzeugs (3) in Abhängigkeit von Flugbedingungen, wobei das Drehflügelflugzeug (3) eine Triebwerksanlage (4) umfasst, die mindestens einen Hauptrotor (5) in Drehung versetzt, der zumindest am Auftrieb des Drehflügelflugzeugs (3) beteiligt ist, wobei das Heckrotororgan (2) an der Kontrolle der Gierbewegungen des Drehflügelflugzeugs (3) beteiligt ist,
**dadurch gekennzeichnet, dass** das Verfahren (30, 40) die folgenden Schritte umfasst:
- Berechnen (31, 41) eines aktuellen Werts eines für den Schubkraftspielraum des Heckrotororgans (2) repräsentativen Betriebsparameters, wobei der Betriebsparameter von einem Verhältnis zwischen einer verfügbaren Leistung der Triebwerksanlage (4) und mindestens einem für eine Dichte der umgebenden Außenluft repräsentativen physikalisch-chemischen Parameter abhängig ist, und
- Vergleichen (33, 43) des aktuellen Werts des Betriebsparameters mit einem vorgegebenen Schwellenwert des Betriebsparameters, wobei der Vergleichsschritt (33, 43) es ermöglicht, den verfügbaren Schubkraftspielraum des Heckrotororgans (2) zu bestimmen.

9. Verfahren nach Anspruch 8,
**dadurch gekennzeichnet, dass** das Überwachungsverfahren (30, 40) einen Informationsschritt (34, 44) zum Informieren eines Piloten des Drehflügelflugzeugs (3) umfasst, der ein Erzeugen einer Steuerinformation umfasst, die für mindestens den verfügbaren Schubkraftspielraum des Heckrotororgans (2) repräsentativ ist.

10. Verfahren nach Anspruch 9,
**dadurch gekennzeichnet, dass** bei dem Informationsschritt (34) die Steuerinformation nur für den verfügbaren Schubkraftspielraum des Heckorgans (2) repräsentativ ist.

11. Verfahren nach Anspruch 9,
**dadurch gekennzeichnet, dass** bei dem Informationsschritt (44) die Steuerinformation einerseits für den verfügbaren Schubkraftspielraum des Heckrotororgans (2) und andererseits für mindestens einen anderen Spielraum repräsentativ ist, der aus der Gruppe ausgewählt wird, die einen Spielraum der Temperatur der Gase an einem Eingang einer freien Niederdruckturbine eines Triebwerks der Triebwerksanlage (4), einen Spielraum der Drehgeschwindigkeit eines Gasgenerators des Motors der Triebwerksanlage (4) und einen Spielraum eines Drehmoments umfasst, das auf eine Ausgangswelle des Motors der Triebwerksanlage (4) ausgeübt wird.

12. Verfahren nach Anspruch 11,
**dadurch gekennzeichnet, dass** die Steuerinformation eine Erstbegrenzungsinformation ist, die repräsentativ für einen Minimalwert ist, der aus dem Spielraum der verfügbaren Schubkraft des Heckrotororgans (2), einem Spielraum der Temperatur der Gase am Eingang der freien Niederdruckturbine, einem Spielraum der Drehgeschwindigkeit des Gasgenerators und einem Spielraum des auf die Ausgangswelle ausgeübten Drehmoments ausgewählt wird.

## Claims

1. Device (1, 11) for monitoring an available thrust margin of an anti-torque member (2) of a rotorcraft (3) as a function of flight conditions, said rotorcraft (3) including a powerplant (4) rotating at least one main rotor (5) participating at least in the lift of said rotorcraft (3), said anti-torque member (2) participating in the control of the yaw movements of said rotorcraft (3),
**characterised in that** said device (1, 11) includes:
• a computer (6, 16) configured to calculate a current value of an operating parameter representative of said thrust margin of said anti-torque member (2), said operating parameter being a function of a ratio between an available power of said powerplant (4) and at least one physicochemical parameter representative of a density of the surrounding outside air, and
• comparison means (8, 18) configured to compare said current value of said operating parameter with a predetermined threshold value of said operating parameter and to determine said available thrust margin of said anti-torque member (2).

2. Device according to claim 1,
**characterised in that** said device (1, 11) includes at least one on-board instrument (9, 19, 29) for informing a pilot of said rotorcraft (3) by generating piloting information which is representative of at least said available thrust margin of said anti-torque member (2).

3. Device according to claim 2,
**characterised in that** said at least one on-board instrument (9) is configured to generate said piloting information which is representative only of said available thrust margin of said anti-torque member (2).

4. Device according to claim 2,
**characterised in that** said at least one on-board instrument (19, 29) is configured to generate said piloting information which is representative of said available thrust margin of said anti-torque member (2) and of at least another margin selected from the group comprising a gas temperature margin at an inlet of a free low-pressure turbine of an engine of said powerplant (4), a rotational speed margin of a gas generator of said engine of said powerplant (4) and a margin of a torque exerted on an output shaft of said engine of said powerplant (4).

5. Device according to claim 4,
**characterised in that** said piloting information is first limit information representative of a minimum value selected from said available thrust margin of said anti-torque member (2), said gas temperature margin at said inlet of said free low-pressure turbine, said rotational speed margin of said gas generator and said margin of said torque exerted on said output shaft.

6. Device according to any of claims 1 to 5,
**characterised in that** a memory (17) stores at least three predetermined threshold values different from said operating parameter, said at least three predetermined threshold values being respectively related to at least three speeds of said powerplant (4), said at least three speeds comprising a take-off speed of said rotorcraft (3), a maximum continuous speed and a transient speed.

7. Rotorcraft (3) including a powerplant (4) rotating at least one main rotor (5) participating at least in the lift of said rotorcraft (3), said rotorcraft (3) including an anti-torque member (2) participating in the control of the yaw movements of said rotorcraft (3),
**characterised in that** said rotorcraft (3) includes a monitoring device (1, 11) according to any of claims 1 to 6 for monitoring an available thrust margin of said anti-torque member (2) as a function of flight conditions.

8. Method (30, 40) for monitoring an available thrust margin of an anti-torque member (2) of a rotorcraft (3) as a function of flight conditions, said rotorcraft (3) including a powerplant (4) rotating at least one main rotor (5) participating at least in the lift of said rotorcraft (3), said anti-torque member (2) participating in the control of the yaw movements of said rotorcraft (3),
**characterised in that** said method (30, 40) includes the following steps:
• calculating (31, 41) a current value of an operating parameter representative of said thrust margin of said anti-torque member (2), said operating parameter being a function of a ratio between an available power of said powerplant (4) and at least one physicochemical parameter representative of a density of the surrounding outside air, and
• comparing (33, 43) said current value of said operating parameter with a predetermined threshold value of said operating parameter, said comparison step (33, 43) making it possible to determine said available thrust margin of said anti-torque member (2).

9. Method according to claim 8,
**characterised in that** said monitoring method (30, 40) includes an information step (34, 44) for informing a pilot of said rotorcraft (3), including generating piloting information which is representative of at least said available thrust margin of said anti-torque member (2).

10. Method according to claim 9,
**characterised in that** during said information step (34), said piloting information is representative only of said available thrust margin of said anti-torque member (2).

11. Method according to claim 9,
**characterised in that** during said information step (44), said piloting information is representative of said available thrust margin of said anti-torque member (2) and of at least one other margin selected from the group comprising a gas temperature margin at an inlet of a free low-pressure turbine of an engine of said powerplant (4), a rotational speed margin of a gas generator of said engine of said powerplant (4) and a margin of a torque exerted on an output shaft of said engine of said powerplant (4).

12. Method according to claim 11,
**characterised in that** said piloting information is first limit information representative of a minimum value selected from said available thrust margin of said anti-torque member (2), a gas temperature margin at said inlet of said free low-pressure turbine, a rotational speed margin of said gas generator and a margin of said torque exerted on said output shaft.
